# EUROPÄISCHE PATENTSCHRIFT

(11) **EP 2 479 880 B1**
(45) Veröffentlichungstag und Bekanntmachung des Hinweises auf die Patenterteilung: **24.08.2016**
(21) Anmeldenummer: 11151910.4
(22) Anmeldetag: 24.01.2011
(51) Int. Cl.: H01F 30/12, H02M 7/06, H01F 27/40

(54) **Stromversorgungsanordnung zum Gleichrichten**
Power supply assembly for rectification
Alimentation en courant électrique pour le redressement

(43) Veröffentlichungstag der Anmeldung: 25.07.2012
(73) Patentinhaber: AEG Power Solutions GmbH, 59581 Warstein-Belecke (DE)
(72) Erfinder: Wallmeier , Dr. Peter, 59556 Lippstadt (DE); Düppe Gregor, 59581 Warstein (DE); Malberg, Paul, 59609 Anröchte (DE)
(74) Vertreter: Graefe, Jörg

(56) Entgegenhaltungen:
- CN-Y- 2 202 609
- CN-Y- 200 990 560
- GB-A- 727 553
- US-A- 3 535 617
- US-A- 3 845 437
- Rudolf Lappe: "Leistungselektronik", 31. Dezember 1987 (1987-12-31), VEB VERLAG TECHNIK BERLIN, Berlin, XP002655361, ISBN: 3-341-00308-8 Seiten 184-187, * Seiten 184-187 *

## Beschreibung

Die vorliegende Erfindung betrifft eine Stromversorgungsanordnung zum Gleichrichten von dreiphasigem Strom in mehrpulsigen Gleichstrom gemäß Anspruch 1. Vorteilhafte Weiterbildungen sind in den abhängigen Ansprüchen definiert.

Aus Lehrbüchern sind derartige Stromversorgungsanordnungen bekannt. So ist beispielsweise in dem Lehrbuch "Grundlagen der Leistungselektronik", K. Heumann, ISBN 3-519-06110-4 eine Stromversorgungsanordnung beschrieben, bei der sekundärseitige Spulen eines Dreiphasenvirechselstromtransformators mit ersten Stromrichterventilen zu einem M3-Gleichrichter verschaltet sind.

Weitere Stromversorgungsanordnungen zum Gleichrichten sind aus den Dokumenten CN200990560Y, CN22026094 und US3535617 bekannt.

Mit der in dem Lehrbuch beschriebenen Stromversorgungsanordnung, ist es möglich, einen Gleichstromverbraucher mit Strom aus einem Wechselstromkreis zu versorgen. Am Ausgang der Stromversorgungsanordnung ist eine Gleichspannung abgreifbar, deren Höhe im Wesentlichen durch das Übersetzungsverhältnis des Transformators bestimmt ist. Die Höhe der Gleichspannung ist nicht variabel.

Es sind allerdings Gleichstromverbraucher bekannt, die in verschiedenen Situationen mit unterschiedlich hohen Gleichspannungen versorgt werden müssen. In einem einfachen Fall soll ein Gleichstromverbraucher an Gleichspannungen mit zwei unterschiedlichen Höhen angelegt werden.

Eine einfache Art der Realisierung von unterschiedlichen Gleichspannungen an dem Ausgang eines M3-Gleichrichters wird durch die Verwendung von steuerbaren Stromrichterventilen ermöglicht, was in dem gleichen Lehrbuch beschrieben ist. Die steuerbaren Stromrichterventile können beispielsweise mit einem Phasenanschnitt betrieben werden. Damit kann die Spannung am Ausgang des Gleichrichters zumindest in einem Bereich stufenlos eingestellt werden.

Die Einstellung einer Spannung mithilfe eines Phasenanschnitts hat jedoch den Nachteil, dass der Leistungsfaktor aufgrund des höheren Anteils von Oberschwingungen und daraus resultierender Verzerrungsblindleistung abnimmt, je größer der Steuerwinkel ist, mit dem die steuerbaren Stromrichterventile angesteuert werden.

Der Erfindung liegt daher das Problem zu Grunde, eine Stromversorgungsanordnung der eingangs genannten Art so zu verbessern, dass wenigstens zwei Ausgangsspannungen bei einem hohen Leistungsfaktor zur Verfügung gestellt werden können. Ein weiteres Ziel der Erfindung ist es, eine möglichst konstante Gleichspannung am Ausgang des Gleichrichters zur Verfügung zu stellen.

Dieses Problem wird erfindungsgemäß dadurch gelöst, dass die Stromversorgungsanordnung Mittel zum Ändern des Übersetzungsverhältnisses des Dreiphasenwechselstromtransformators oder der drei Einphasenwechselstromtransformatoren aufweist. Durch die Änderung des Übersetzungsverhältnisses des Dreiphasenwechselstromtransformators oder der drei Einphasenwechselstromtransformatoren ist es möglich, am Ausgang des Gleichrichters verschiedene Spannungen zur Verfügung zu stellen, ohne dass dazu Stromrichterventile auf der Sekundärseite des Transformators bzw. der Transformatoren notwendig sind, die einen sekundärseitigen Phasenanschnitt ermöglichen. Dadurch kann ein hoher Leistungsfaktor beim Betrieb der Stromversorgungsanordnung mit den durch das eingestellte Übersetzungsverhältnis des Transformators bzw. der Transformatoren vorgegebenen Ausgangspannungen erreicht werden.

Eine erfindungsgemäße Stromversorgungsanordnung kann so ausgestaltet sein, dass
- der Dreiphasenwechselstromtransformator drei erste primärseitige Spulen und drei zweite primärseitige Spulen umfasst, die jeweils zusammen mit einer ersten sekundärseitigen Spule auf einem Schenkel angeordnet sind bzw.
- jeder der drei Einphasenwechselstromtransformatoren eine erste primärseitige Spule und eine zweite primärseitige Spule auf einem der Schenkel seines Transformatorkerns aufweist. Mittel zum Ändern des Übersetzungsverhältnisses einer derartigen Stromversorgungsanordnung können steuerbare Schalter umfassen. Mittels der steuerbaren Schalter kann bei einer erfindungsgemäßen Schaltungsanordnung jede zweite primärseitige Spule unmittelbar oder mittelbar in Reihe zu der ersten primärseitigen Spule
- auf dem gleichen Schenkel des Dreiphasenwechselstromtransformators bzw.
- auf dem gleichen Transformatorkern eines der Einphasenwechselstromtransformatoren
geschaltet werden.

Eine erfindungsgemäße Stromversorgungsanordnung kann drei dritte primärseitige Spulen umfassen. Mittels der steuerbaren Schalter kann jede dritte primärseitige Spule unmittelbar oder mittelbar in Reihe zu entweder der ersten primärseitigen Spule oder der ersten primärseitigen Spule und der zweiten primärseitigen Spule
- auf dem gleichen Schenkel des Dreiphasenwechselstromtransformators bzw.
- auf dem gleichen Transformatorkern eines der Einphasenwechselstromtransformatoren
geschaltet werden. Unmittelbar in Reihe geschaltet soll in diesem Zusammenhang bedeuten, dass jede dritte primärseitige Spule vom gleichen Strom durchflossen wird, wie die erste primärseitige Spule und ggf. die zweite primärseitige Spule auf dem gleichen Schenkel. Mittelbar in Reihen geschaltet soll in diesem Zusammenhang heißen, dass jede dritte primärseitige Spule von einem Teilstrom durchflossen wird wie die erste primärseitige Spule und ggf. die zweite primärseitige Spule auf dem gleichen Schenkel.

Mittels der ersten steuerbaren Schalter und der zweiten steuerbaren Schalter kann es bei einer erfindungsgemäßen Stromversorgungsanordnung möglich sein, eine Parallelschaltung der zweiten primärseitigen Spule und der dritten primärseitigen Spule in Reihe zu der ersten primärseitigen Spule
- auf dem gleichen Schenkel des Dreiphasenwechselstromtransformators bzw.
- auf dem gleichen Transformatorkern eines der Einphasenwechselstromtransformatoren
zu schalten.

Die Stromversorgungsanordnung kann Leistungssteller aufweisen, mit denen die von der Primärseite des Dreiphasenwechselstromtransformators zu dessen Sekundärseite bzw. von den Primärseiten der drei Einphasenwechselstromtransformatoren zu deren Sekundärseiten übertragbare Leistung einstellbar ist. Mit diesen Leistungsstellern kann die von der Stromversorgungsanordnung zu einer am Ausgang des Gleichrichters angeschlossenen Last übertragenen Leistung eingestellt werden.

Ist das Übersetzungsverhältnis des Transformators bzw. der Transformatoren so gewählt, dass eine hohe primärseitige Spannung in eine kleine sekundärseitige Spannung von beispielsweise 9 V bis 15 V und ein kleiner primärseitiger Strom in einen hohen sekundärseitigen Strom von beispielsweise 9 kA transformiert wird, ist es von Vorteil die Leistungsstellung primärseitig vorzunehmen, um das Stellen der hohen Ströme zu vermeiden.

Die Leistungssteller können die steuerbaren Schalter umfassen. Die Reihenschaltung und ggf. Parallelschaltung der ersten, zweiten und ggf. dritten primärseitigen Spulen kann also von den Leistungsstellern übernommen werden. Die Leistungssteller sind dann auch Mittel zum Ändern des Übersetzungsverhältnisses des Dreiphasenwechselstromtransformators oder der drei Einphasenwechselstromtransformatoren.

Die Spannungsanordnung kann ein Steuerungsmittel aufweisen, mit welchem die Leistungssteller zum Beispiel in Spannungsfolgesteuerung ansteuerbar sind.

Der Dreiphasenwechselstromtransformator kann primärseitig im Dreieck geschaltet sein. Ebenso ist es möglich, dass der Dreiphasenwechselstromtransformator primärseitig im Stern geschaltet ist. Der primärseitige Sternpunkt kann dann über je einen Serienresonanzkreis mit einem Außenleiteranschluss der Stromversorgungsanordnung verbunden sein.

Die ersten Stromrichterventile können mit den ersten sekundärseitigen Spulen zu einem M3-Gleichrichter verschaltet sein. Es können aber auch Gleichrichter mit anderen Topologien angeschlossen werden.

In einer besonderen Ausführung der Stromversorgungsanordnung kann der Dreiphasenwechselstromtransformator drei zweite sekundärseitige Spulen umfassen, die jeweils auf einem Schenkel des Transformatorkerns angeordnet sind. Eine derartige Stromversorgungsanordnung kann wenigstens einen zweiten Gleichrichter umfassen, der zweite Stromrichterventile aufweist. Diese zweiten Stromrichterventile können mit den zweiten sekundärseitigen Spulen zu dem zweiten Gleichrichter, insbesondere zu einem M3-Gleichrichter verschaltet sein.

Der erste M3-Gleichrichter umfassend die ersten Stromrichterventile und der zweite M3-Gleichrichter umfassend die zweiten Stromrichterventile können parallel geschaltet sein. Vorzugsweise sind der erste M3-Gleichrichter und der zweite M3-Gleichrichter zu einer M3.2-Gleichrichterschaltung verschaltet. Eine M3.2-Gleichrichterschaltung ist auch als Saugdrosselschaltung bekannt.

Der Vorteil einer M3.2-Gleichrichterschaltung gegenüber einer Parallelschaltung von zwei M3-Gleichrichtern ist die Phasenverschiebung von 180° der durch die auf einem Schenkel angeordneten sekundärseitigen Spulen fließenden Ströme. Damit lässt sich ein 6-puls-Gleichrichter erhalten. Saugdrosselschaltungen sind zum Beispiel in dem eingangs genannten Lehrbuch beschrieben. Das Merkmal und ggf. ein Vorteil einer M3.2-Gleichrichterschaltung gegenüber einer B6-Brückenschaltung ist, dass sie bei gleicher Spannungsbeanspruchung der Stromrichterventile bei doppeltem Gleichstrom nur die halbe Gleichspannung liefert.

Als besonders vorteilhaft hat sich eine Anordnung erwiesen, die aus einer ersten erfindungsgemäßen Stromversorgungsanordnung und einer zweiten erfindungsgemäßen Stromversorgungsanordnung zusammengesetzt ist und wobei der Dreiphasenwechselstromtransformator der ersten Stromversorgungsanordnung und der Dreiphasenwechselstromtransformator der zweiten Stromversorgungsanordnung an die gleichen Außenleiter angeschlossen sind und wobei der Dreiphasenwechselstromtransformator der ersten Stromversorgungsanordnung primärseitig im Dreieck und der Dreiphasenwechselstromtransformator der zweiten Stromversorgungsanordnung primärseitig im Stern geschaltet ist. Durch die primärseitige Dreiecksschaltung und die primärseitige Sternschaltung erhält man eine Phasenverschiebung von 30° zwischen den Strömen auf den Sekundärseiten der Drehstromtransformatoren. Sind an die beiden Dreiphasenwechselstromtransformatoren M3.2-Gleichrichterschaltungen angeschlossen, kann dann am Ausgang der erfindungsgemäßen, aus der ersten Stromversorgungsanordnung und der zweiten Stromversorgungsanordnung zusammengesetzten Anordnung eine 12-pulsige Ausgangsspannung erhalten werden. Die Ausgänge der Gleichrichter bzw. der Gleichrichterschaltungen sind vorteilhaft parallel geschaltet.

Weitere Merkmale und Vorteile der vorliegenden Erfindung werden deutlich anhand der nachfolgenden Beschreibung unter Bezugnahme auf die beiliegenden Abbildungen. Darin zeigen
- Fig. 1: ein vereinfachtes Schaltbild einer erfindungsgemäßen Anordnung bestehend aus einer ersten erfindungsgemäßen Schaltungsanordnung und einer zweiten erfindungsgemäßen Schaltungsanordnung,
- Fig. 2: ein erstes Beispiel für eine Schaltung von primärseitigen Spulen eines Dreiphasenwechselstromtransformators und Leistungsstellern,
- Fig. 3: ein zweites Beispiel für eine Schaltung von primärseitigen Spulen eines Dreiphasenwechselstromtransformators und Leistungsstellern,
- Fig. 4: ein drittes Beispiel für eine Schaltung von primärseitigen Spulen eines Dreiphasenwechselstromtransformators und Leistungsstellern,
- Fig. 5: ein viertes Beispiel für eine Schaltung von primärseitigen Spulen eines Dreiphasenwechselstromtransformators und Leistungsstellern,
- Fig. 6: den Aufbau eines Leistungsstellers,
- Fig. 7: Serienresonanzkreise zur Verbindung eines Neutralleiters mit Außenleitern.

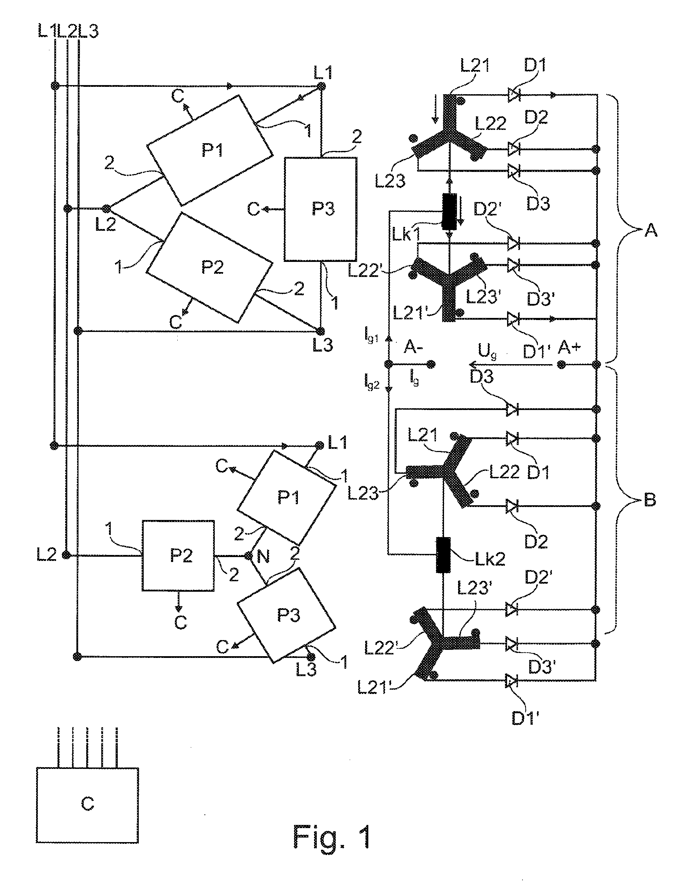

Anhand der Figur 1 wird zunächst die in der oberen Bildhälfte dargestellte erste erfindungsgemäße Schaltungsanordnung A erläutert, bevor auf die zweite erfindungsgemäße Schaltungsanordnung B und die gesamte in Figur 1 dargestellte Anordnung A, B eingegangen wird.

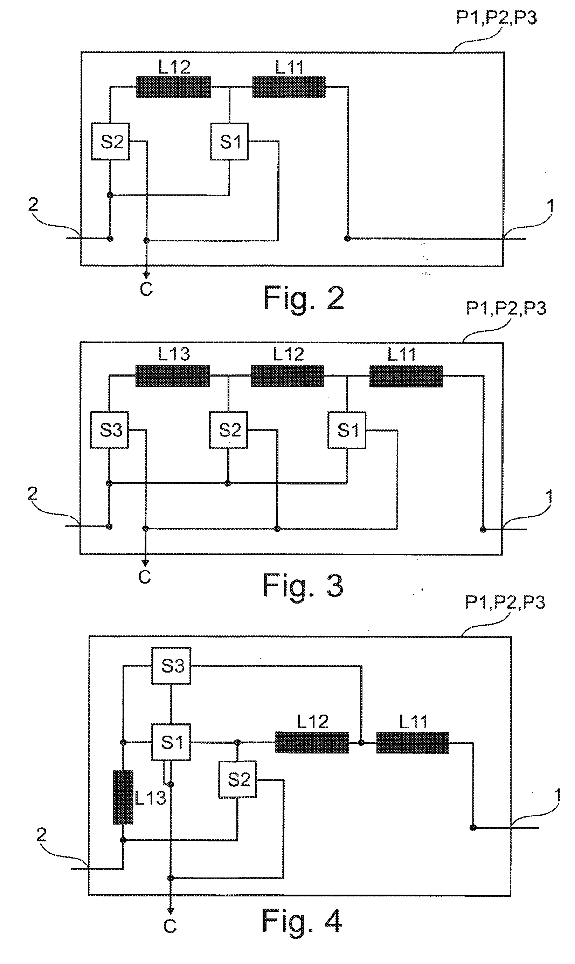

Die in der Figur 1 dargestellte erfindungsgemäße erste Schaltungsanordnung A umfasst einen ersten Dreiphasenwechselstromtransformator, von dem nur die Sekundärseite explizit dargestellt ist. Anstelle von primärseitigen Spulen des Dreiphasenwechselstromtransformators sind Schaltungen P1, P2, P3 dargestellt. Wie diese Schaltungen aufgebaut sein können, ist in den Figuren 2, 3, 4 und 5 näher dargestellt, wobei jede dieser Figuren eine mögliche Variante zeigt, die in der ersten Schaltungsanordnung eingesetzt werden kann. Jede der in den Figuren 2, 3, 4 und 5 dargestellten Schaltungen P1, P2, P3 hat einen ersten Anschluss 1 und einen zweiten Anschluss 2, die auch in der Figur 1 dargestellt sind.

Die Schaltungen P1, P2, P3 sind beim Dreiphasenwechselstromtransformator der ersten Stromversorgungsanordnung A im Dreieck geschaltet und an die Außenleiter eines Wechselstromnetzes L1, L2, L3 angeschlossen.

Die Varianten für die Schaltungen P1, P2, P3 umfassen wenigstens zwei primärseitige Spulen L11, L12, L13 des Dreiphasenwechselstromtransformators der ersten Schaltungsanordnung A, die auf einem Schenkel eines Transformatorkerns des Dreiphasenwechselstromtransformators angeordnet sind. So sind die primärseitigen Spulen der Schaltung P1 auf einem ersten Schenkel, die primärseitigen Spulen der Schaltung P2 auf einem zweiten Schenkel und die primärseitigen Spulen P3 auf einem dritten Schenkel angeordnet.

Bei der in Figur 2 dargestellten Variante sind auf jedem der drei Schenkel des Transformatorkerns des Dreiphasenwechselstromtransformators zwei primärseitige Spulen angeordnet, nämlich eine erste primärseitige Spule L11 und eine zweite primärseitige Spule L12. Die erste primärseitige Spule L11 ist mit dem ersten Anschluss der Schaltung P1, P2, P3 und über einen Knoten mit der zweiten primärseitigen Spule L12 verbunden. Der Knoten ist außerdem über einen Leistungssteller S1 mit dem zweiten Anschluss 2 der Schaltungen P1, P2, P3 verbunden. Die zweite primärseitige Spule L12 ist über einen Leistungssteller S2 ebenfalls mit dem zweiten Anschluss 2 der Schaltung P12, P23, P31 verbunden. Der erste Anschluss 1 und der zweite Anschluss 2 sind in der in der Figur 1 dargestellten Art und Weise mit einem der Außenleiter L1, L2, L3 verbunden. Die Leistungsteller S1, S2 sind über Steueranschlüsse mit einer in der Figur 1 dargestellten Steuerung C verbunden. Die Verbindungsleitungen zur Steuerung sind in der Figur 1 allerdings nicht dargestellt, um die Übersicht nicht zu erschweren.

Die in der Figur 3 dargestellte Variante unterscheidet sich von der in der Figur 2 dargestellten Variante dadurch, dass drei primärseitige Spulen L11, L12, L13 auf einem Schenkel des Dreiphasenwechselstromtransformators angeordnet sind. Die dritte primärseitige Spule L3 liegt in Reihe zu einem Leistungssteller S3. Diese Reihenschaltung liegt parallel zu dem Leistungssteller S2 und ist somit ebenfalls mit dem zweiten Anschluss der Schaltungen P1, P2, P3 verbunden.

Die primärseitigen Spulen L11, L12 bei der Variante gemäß der Figur 2 oder die primärseitigen Spulen L11, L12, L13 können innerhalb einer Transformatorwicklung realisiert sein, die eine mittlere Anzapfung bzw. zwei mittlere Anzapfungen aufweist, die die Knoten zwischen den primärseitigen Spulen L11, L12, L13 bildet bzw. bilden.

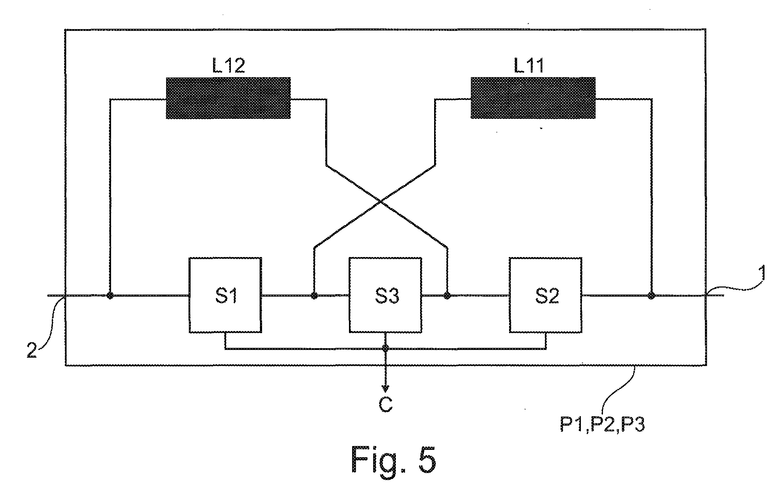

Als Leistungssteller S1, S2, S3 werden vorzugsweise Thyristorsteller mit zwei antiparallel geschalteten Thyristoren Th1, Th2 eingesetzt, wie in Figur 5 dargestellt. Es können aber auch Triacs, IGBT oder andere geeignete steuerbare Schalter benutzt werden.

Die Leistungssteller S1, S2 bzw. S1, S2, S3 können in Vollaussteuerung betrieben werden. Sie wirken dann als steuerbare Schalter zum Umschalten der primärseitigen Wicklungszahl des Dreiphasenwechselstromtransformators. Sinnvoll ist es allerdings eine Phasenanschnittsteuerung zu ermöglichen. Dann kann nicht nur die Wicklungszahl geändert werden, sondern auch die mit dem Dreiphasenwechselstromtransformator übertragbare Leistung. Vorzugsweise werden die Leistungssteller dann in Spannungsfolgesteuerung angesteuert, wie es zum Beispiel in dem Lehrbuch "Thyristorized Power Controller", G. K. Dubey, S. R. Doradla, A. Joshi, R. M. K. Sinha, ISBN 0-85226-190-x im Abschnitt 5.1.4 "Sequence Control of AC Regulators" beschrieben ist.

Auch bei der in der Figur 4 dargestellten Variante der Schaltungen P1, P2, P3 sind drei primärseitige Spulen L11, L12, L13 und drei Leistungssteller S1, S2, S3 vorgesehen. Die Topologie der Schaltung ist allerdings anders als die der in der Figur 3 dargestellten Variante. Die Leistungssteller S1, S2, S3 und die Spulen L11, L12, L13 sind so angeordnet, dass die Spulen L11, L12, L13 bei ausgeschalteten Leistungsstellern S2, S3 in Reihe zu dem Leistungssteller S1 geschaltet sind. Über den Leistungssteller S1 kann dann die Leistung eingestellt werden.

Ist dagegen der Leistungssteller S1 ausgeschaltet und sind die beiden Leistungsteller S2, S3 in Betrieb, ist die zweite primärseitige Spule L12 in Reihe zum Leistungssteller S2 und die dritte primärseitige Spule L13 in Reihe zum Leistungssteller S3 geschaltet. Die Reihenschaltungen L12, S2 und L13, S3 sind parallel geschaltet und in Reihe zur ersten primärseitigen Spule L11. Die Leistungssteller S2, S3 können dann synchron betrieben werden, um die zu übertragende Leistung einzustellen.

Auch bei der dritten Variante können die Leistungssteller in Vollaussteuerung als steuerbare Schalter, in Phasenanschnittssteuerung oder in Spannungsfolgesteuerung betrieben werden, um die primärseitige Wicklungszahl und ggf. die Leistung einzustellen.

Bei der in der Figur 5 dargestellten vierten Variante der Schaltungen P1, P2, P3 sind eine erste primärseitige Spule L11, eine zweite primärseitige Spule L12, ein erster Leistungssteller S1, ein zweiter Leistungssteller S2 und ein dritter Leistungssteller S3 so verschaltet, dass bei Ansteuerung des ersten Leistungsstellers S1 nur die erste primärseitige Spule L11 und bei Ansteuerung des zweiten Leistungstellers S2 nur die zweite primärseitige Spule
L12 zur Übertragung der elektrischen Energie von der Primärseite zur Sekundärseite des Dreiphasenwechselstromtransformators benutzt wird. Wird dagegen der dritte Leistungssteller S3 angesteuert, fließt ein primärseitiger Strom durch beide primärseitige Spulen L11, L12. Sind die primärseitigen Spulen L11, L12 unterschiedlich dimensioniert lassen sich mit der vierten Variante der Schaltung P1, P2, P3 mit zwei primärseitigen Spulen und drei Leistungsstellern S1, S2, S3 als Mittel zum Ändern des Übersetzungsverhältnisses drei Übersetzungsverhältnisse des Dreiphasenwechselstromtransformators einstellen.

Auch bei der vierten Variante können die Leistungssteller S1, S2, S3 in Vollaussteuerung als steuerbare Schalter, in Phasenanschnittssteuerung oder in Spannungsfolgesteuerung betrieben werden, um die primärseitige Wicklungszahl und ggf. die Leistung einzustellen.

Die Sekundärseite des Dreiphasenwechselstromtransformators der ersten Stromversorgungsanordnung umfasst auf dem ersten Schenkel, dem zweiten Schenkel und dem dritten Schenkel je zwei Spulen, nämlich je eine erste sekundärseitige Spule L21, L22, L23 und eine zweite sekundärseitige Spule L21', L22', L23', wobei auf dem ersten Schenkel die Spulen L21, L21', auf dem zweiten Schenkel die Spulen L22, L22' und auf dem dritten Schenkel die Spulen L23, L23' angeordnet sind.

Die ersten sekundärseitigen Spulen L21, L22, L23 sind im Stern geschaltet. Die nicht mit dem Sternpunkt verbundenen Anschlüsse der ersten sekundärseitigen Spulen L21, L22, L23 sind mit je einem ersten Stromrichterventil D1, D2, D3 verbunden. Bei den Stromrichterventilen handelt es sich um Dioden D1, D2, D3, deren Kathoden mit den Anschlüssen der ersten sekundärseitigen Spulen L21, L22, L23 verbunden und deren Anoden zusammengeführt sind. Die ersten sekundärseitigen Spulen L21, L22, L23 und die Stromrichterventile D1, D2, D3 sind zu einem ersten M3-Gleichrichter verschaltet.

Auch die zweiten sekundärseitigen Spulen L21', L22', L23' sind im Stern geschaltet. Die nicht mit dem Sternpunkt verbundenen Anschlüsse der zweiten sekundärseitigen Spulen L21', L22', L23' sind mit je einem zweiten Stromrichterventil D1', D2', D3' verbunden. Bei den Stromrichterventilen handelt es sich ebenfalls um Dioden D1', D2', D3', deren Kathoden mit den Anschlüssen der zweiten sekundärseitigen Spulen L21', L22', L23' verbunden und deren Anoden zusammengeführt sind. Auch die ersten sekundärseitigen Spulen L21', L22', L23' und die Stromrichterventile D1', D2', D3' sind zu einem zweiten M3-Gleichrichter verschaltet.

Die auf einem Schenkel angeordnete erste sekundärseitige Spule L21, L22, L23 und die auf dem gleichen Schenkel angeordnete zweite sekundärseitige Spule L21', L22', L23' sind um 180° phasenversetzt und die Sternpunkte des ersten M3-Gleichrichters und des zweiten M3-Gleichrichters sind über eine Drossel Lk miteinander verbunden. Die Drossel Lk wird als Saugdrossel bezeichnet und hat eine mittlere Anzapfung, die mit einem negativen Anschluss A- eines Ausgangs der ersten Stromversorgungsanordnung A verbunden ist. Ein positiver Anschluss A+ der ersten Stromversorgungsanordnung A ist mit den Kathoden der ersten und zweiten Stromrichterventile D1, D2, D3, D1', D2', D3' verbunden. Der erste M3-Gleichrichter und der zweite M3-Gleichrichter bilden auf diese Art und Weise einen M3.2-Gleichrichter, der in der Literatur auch als Saugdrosselschaltung bezeichnet ist.

Die zweite Stromversorgungsanordnung B, die in der unteren Hälfte der Figur 1 dargestellt ist, entspricht in vielem der ersten Stromversorgungsanordnung, wie sie in der oberen Hälfte dargestellt ist. Sie weist insbesondere einen Dreiphasenwechselstromtransformator auf, der dem Dreiphasenwechselstromtransformator der ersten Stromversorgungsanordnung A entspricht. Daher sind die die Drehstromtransformatoren bildenden Komponenten gleich bezeichnet. Die Sekundärseite des Transformators der zweiten Stromversorgungsanordnung B, d. h die ersten und zweiten Spulen L21, L22, L23, L21', L22', L23', ist ebenso mit Stromrichterventilen D1, D2, D3, D1', D2', D3' und einer Drossel Lk zu einem M3.2-Gleichrichter verschaltet, wie die Sekundärseite des Dreiphasenwechselstromtransformators der ersten Schaltungsanordnung. Die Ausgänge beider M3.2-Gleichrichter sind parallel geschaltet.

Ferner sind die Schaltungen P1, P2, P3 auf der Primärseite des Dreiphasenwechselstromtransformators der zweiten Stromversorgungsanordnung B genauso ausgestaltet wie auch die Primärseite des Dreiphasenwechselstromtransformators der ersten Stromversorgungsanordnung A. Ein Unterschied besteht lediglich darin, wie die Schaltungen P1, P2, P3 angeordnet sind. Während die Schaltungen P1, P2, P3 bei der ersten Stromversorgungsanordnung A im Dreieck angeordnet sind, sind die Schaltungen P1, P2, P3 bei der zweiten Stromversorgungsanordnung B im Stern angeordnet. Das führt auf der Sekundärseite des Dreiphasenwechselstromtransformators der zweiten Stromversorgungsanordnung B zu gegenüber der Sekundärseite des Dreiphasenwechselstromtransformators der ersten Stromversorgungsanordnung A zu um 30° verschobenen Strömen und Spannungen.

Das führt dazu, dass am Ausgang A+, A- der gesamten Anordnung A, B eine 12-pulsige Gleichspannung anliegt.

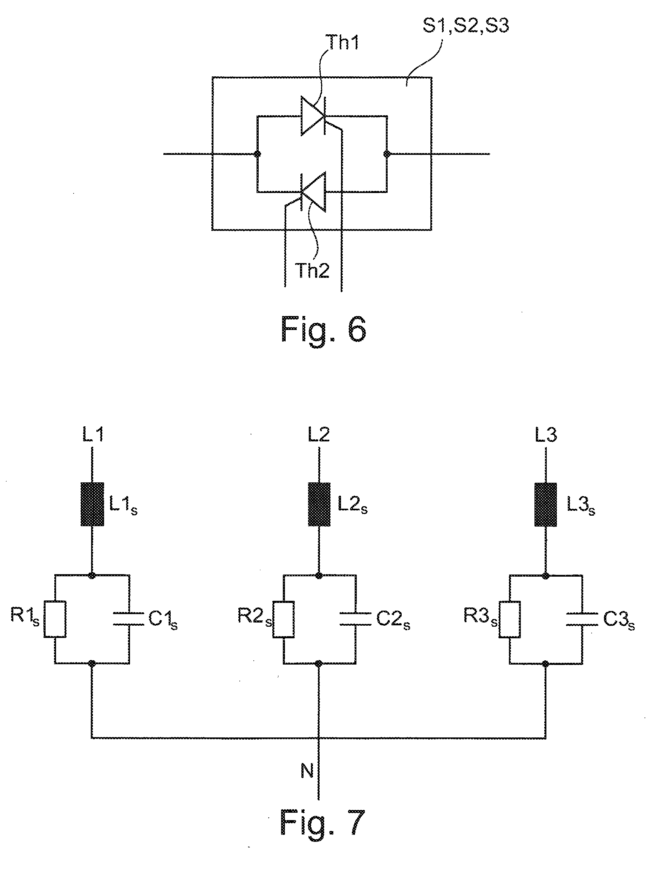

Die Sternschaltung der Schaltungen P1, P2, P3 kann, wie in Figur 1 dargestellt, ohne Neutralleiter ausgeführt sein. Es ist aber ebenso möglich, den Sternpunkt N mit den Au ßenleitern L1, L2, L3 zu verbinden. Dies erfolgt dann vorteilhaft wie in Figur 7 dargestellt über Serienresonanzkreise aus Drosseln L1s, L2s, L3s und Kondensatoren C1 s, C2s, C3s, um Netzrückwirkungen durch Oberschwingungen zu vermeiden. Parallel zu den Kondensatoren C1 s, C2s, C3s können ohmsche Widerstände R1s, R2s, R3s geschaltet sein.

## Patentansprüche

1. Anordnung aus einer ersten Stromversorgungsanordnung (A) zum Gleichrichten von dreiphasigem Strom in mehrpulsigen Gleichstrom und einer zweiten Stromversorgungsanordnung (B) zum Gleichrichten von dreiphasigem Strom in mehrpulsigen Gleichstrom, wobei die erste und die zweite Stromversorgungsanordnung (A, B) jeweils ausgestattet sind
- mit wenigstens einem Dreiphasenwechselstromtransformator mit einem Transformatorkern, wobei der Dreiphasenwechselstromtransformator drei erste sekundärseitige Spulen (L21, L22, L23) umfasst, die jeweils auf einem Schenkel des Transformatorkerns angeordnet sind, und drei zweite sekundärseitige Spulen (L21', L22', L23') umfasst, die jeweils auf einem Schenkel des Transformatorkerns angeordnet sind,
- mit einer M3.2 Gleichrichterschaltung aus zwei miteinander verschalteten M3-Gleichrichtern,
- wobei ein erster M3-Gleichrichter erste Stromrichterventile (D1, D2, D3) umfasst, wobei die ersten Stromrichterventile (D1, D2, D3) mit den ersten sekundärseitigen Spulen (L21, L22, L23) zu dem ersten M3-Gleichrichter verschaltet sind, und
- wobei ein zweiter M3-Gleichrichter zweite Stromrichterventile (D1', D2', D3') umfasst, wobei die zweiten Stromrichterventile (D1', D2', D3') mit den zweiten sekundärseitigen Spulen (L21', L22', L23') zu dem zweiten M3-Gleichrichter verschaltet sind,
- mit Mitteln (S1, S2, S3) zum Ändern des Übersetzungsverhältnisses des Dreiphasenwechselstromtransformators,
wobei bei der ersten Stromversorgungsanordnung (A)
- der Dreiphasenwechselstromtransformator primärseitig im Dreieck geschaltet ist,
wobei bei der zweiten Stromversorgungsanordnung (B)
- der Dreiphasenwechselstromtransformator primärseitig im Stern geschaltet ist,
- der primärseitige Sternpunkt (N) über je einen Serienresonanzkreis mit den Außenleiteranschlüssen (L1, L2, L3) der Stromversorgungsanordnung (B) verbunden ist,
wobei der Dreiphasenwechselstromtransformator der ersten Stromversorgungsanordnung (A) und der Dreiphasenwechselstromtransformator der zweiten Stromversorgungsanordnung (B) parallel geschaltet sind, und die Ausgänge der Gleichrichter bzw. der Gleichrichterschaltungen parallel geschaltet sind.

2. Anordnung nach Anspruch 1, **dadurch gekennzeichnet, dass** die Dreiphasenwechselstromtransformatoren drei erste primärseitige Spulen (L11) und drei zweite primärseitige Spulen (L12) umfassen, die jeweils zusammen mit einer der ersten sekundärseitigen Spulen (L21,L22,L23) auf einem Schenkel des Transformatorkerns angeordnet sind und
dass die Mittel (S1, S2, S3) zum Ändern des Übersetzungsverhältnisses des Dreiphasenwechselstromtransformators steuerbare Schalter (Th1, Th2) umfassen und
dass mittels der steuerbaren Schalter (Th1, Th2) jede zweite primärseitige Spule (L12) unmittelbar oder mittelbar in Reihe zu der ersten primärseitigen Spule (L11) auf dem gleichen Schenkel der Dreiphasenwechselstromtransformatoren schaltbar ist.

3. Anordnung nach Anspruch 2, **dadurch gekennzeichnet, dass** die Stromversorgungsanordnungen (A, B) drei dritte primärseitige Spulen (L13) umfassen und dass mittels der steuerbaren Schalter (Th1, Th2) jede dritte primärseitige Spule (L13) unmittelbar oder mittelbar in Reihe zu entweder der ersten primärseitigen Spule (L11) oder der ersten primärseitigen Spule (L11) und der zweiten primärseitigen Spule (L12) auf dem gleichen Schenkel der Dreiphasenwechselstromtransformatoren bzw.schaltbar ist.

4. Anordnung nach Anspruch 3, **dadurch gekennzeichnet, dass** mittels der steuerbaren Schalter (Th1, Th2) eine Parallelschaltung der zweiten primärseitigen Spule (L12) und der dritten primärseitigen Spule (L13) in Reihe zu der ersten primärseitigen Spule (L11) auf dem gleichen Schenkel der Dreiphasenwechselstromtransformatoren schaltbar ist.

5. Anordung nach einem der Ansprüche 2 bis 3, **dadurch gekennzeichnet, dass** die Stromversorgungsanordnungen (A, B) Leistungssteller (S1, S2, S3) aufweisen, mit denen die von der Primärseite des Dreiphasenwechselstromtransformators zu dessen Sekundärseite übertragbare Leistung einstellbar ist.

6. Anordung nach einem der Ansprüche 2 bis 4, **dadurch gekennzeichnet, dass** die Leistungssteller (S1 , S2, S3) die steuerbaren Schalter (Th1, Th2) beinhalten.

7. Anordnung nach Anspruch 5 oder 6, **dadurch gekennzeichnet, dass** die Stromversorgungsanordnungen (A, B) ein Steuerungsmittel (C) aufweisen, mit welchem die Leistungssteller (S1, S2, S3) in Spannungsfolgesteuerung ansteuerbar sind.

## Claims

1. Arrangement comprising a first power supply arrangement (A) for rectifying three-phase current to produce multi-pulse direct current and a second power supply arrangement (B) for rectifying three-phase current to produce multi-pulse direct current, wherein the first and second power supply arrangements (A, B) are each equipped
- with at least one three-phase AC transformer having a transformer core, wherein the three-phase AC transformer comprises three first secondary-side coils (L21, L22, L23), which are each arranged on one leg of the transformer core, and three second secondary-side coils (L21', L22', L23'), which are each arranged on one leg of the transformer core,
- with an M3.2 rectifier circuit comprising two interconnected M3 rectifiers,
- wherein a first M3 rectifier comprises first converter valves (D1, D2, D3), the first converter valves (D1, D2, D3) being connected up to the first secondary-side coils (L21, L22, L23) to form the first M3 rectifier, and
- wherein a second M3 rectifier comprises second converter valves (D1', D2', D3'), the second converter valves (D1', D2', D3') being connected up to the second secondary-side coils (L21', L22', L23') to form the second M3 rectifier,
- with means (S1, S2, S3) for changing the transformation ratio of the three-phase AC transformer,
wherein in the first power supply arrangement (A),
- the primary side of the three-phase AC transformer is delta-connected,
wherein in the second power supply arrangement (B),
- the primary side of the three-phase AC transformer is star-connected,
- the primary-side star point (N) is connected to the outer conductor connections (L1, L2, L3) of the power supply arrangement (B) via a respective series resonant circuit,
wherein the three-phase AC transformer of the first power supply arrangement (A) and the three-phase AC transformer of the second power supply arrangement (B) are connected in parallel, and the outputs of the rectifiers or of the rectifier circuits are connected in parallel.

2. Arrangement according to Claim 1, **characterized in that** the three-phase AC transformers comprise three first primary-side coils (L11) and three second primary-side coils (L12), which are each arranged together with one of the first secondary-side coils (L21, L22, L23) on one leg of the transformer core, and
**in that** the means (S1, S2, S3) for changing the transformation ratio of the three-phase AC transformer comprise controllable switches (Th1, Th2), and
**in that** the controllable switches (Th1, Th2) can be used to connect each second primary-side coil (L12) directly or indirectly in series with the first primary-side coil (L11) on the same leg of the three-phase AC transformers.

3. Arrangement according to Claim 2, **characterized in that** the power supply arrangements (A, B) comprise three third primary-side coils (L13) and **in that** the controllable switches (Th1, Th2) can be used to connect each third primary-side coil (L13) directly or indirectly in series with either the first primary-side coil (L11) or the first primary-side coil (L11) and the second primary-side coil (L12) on the same leg of the three-phase AC transformers.

4. Arrangement according to Claim 3, **characterized in that** the controllable switches (Th1, Th2) can be used to connect a parallel circuit comprising the second primary-side coil (L12) and the third-primary side coil (L13) in series with the first-primary side coil (L11) on the same leg of the three-phase AC transformers.

5. Arrangement according to either of Claims 2 and 3, **characterized in that** the power supply arrangements (A, B) have power controllers (S1, S2, S3) that can be used to adjust the power transmittable from the primary side of the three-phase AC transformer to the secondary side thereof.

6. Arrangement according to one of Claims 2 to 4, **characterized in that** the power controllers (S1, S2, S3) contain the controllable switches (Th1, Th2).

7. Arrangement according to Claim 5 or 6, **characterized in that** the power supply arrangements (A, B) have a control means (C) that can be used to actuate the power controllers (S1, S2, S3) using voltage sequence control.

## Revendications

1. Arrangement composé d'un premier arrangement d'alimentation électrique (A) destiné à redresser un courant triphasé en un courant continu à impulsions multiples et d'un deuxième arrangement d'alimentation électrique (B) destiné à redresser un courant triphasé en un courant continu à impulsions multiples, les premier et deuxième arrangements d'alimentation électrique (A, B) étant respectivement équipés
- d'au moins un transformateur de courant alternatif triphasé pourvu d'un noyau de transformateur, le transformateur de courant alternatif triphasé comprenant trois premières bobines côté secondaire (L21, L22, L23) qui sont respectivement disposées sur une branche du noyau de transformateur, et trois deuxièmes bobines côté secondaire (L21', L22', L23') qui sont respectivement disposées sur une branche du noyau de transformateur,
- d'un circuit redresseur M3.2 composé de deux redresseurs M3 interconnectés,
- un premier redresseur M3 comprenant des premières valves de convertisseur statique (D1, D2, D3), les premières valves de convertisseur statique (D1, D2, D3) étant interconnectées avec les premières bobines côté secondaire (L21, L22, L23) pour former le premier redresseur M3, et
- un deuxième redresseur M3 comprenant des deuxièmes valves de convertisseur statique (D1', D2', D3'), les deuxièmes valves de convertisseur statique (D1', D2', D3') étant interconnectées avec les deuxièmes bobines côté secondaire (L21', L22', L23') pour former le deuxième redresseur M3,
- de moyens (S1, S2, S3) destinés à modifier le rapport de transformation du transformateur de courant alternatif triphasé,
sur le premier arrangement d'alimentation électrique (A),
- le transformateur de courant alternatif triphasé étant branché en triangle du côté primaire,
sur le deuxième arrangement d'alimentation électrique (B),
- le transformateur de courant alternatif triphasé étant branché en étoile du côté primaire,
- le point neutre (N) côté primaire étant relié respectivement par un circuit de résonance série aux bornes de conducteur externe (L1, L2, L3) de l'arrangement d'alimentation électrique (B),
le transformateur de courant alternatif triphasé du premier arrangement d'alimentation électrique (A) et le transformateur de courant alternatif triphasé du deuxième arrangement d'alimentation électrique (B) étant branchés en parallèle, et les sorties des redresseurs ou des circuits redresseurs étant branchées en parallèle.

2. Arrangement selon la revendication 1, **caractérisé en ce**
**que** les transformateurs de courant alternatif triphasé comprennent trois premières bobines côté primaire (L11) et trois deuxièmes bobines côté primaire (L12), lesquelles sont respectivement disposées sur une branche du noyau de transformateur conjointement avec l'une des premières bobines côté secondaire (L21, L22, L23) et
**que** les moyens (S1, S2, S3) destinés à modifier le rapport de transformation du transformateur de courant alternatif triphasé comprennent des commutateurs commandables (Th1, Th2) et
**que** chaque deuxième bobine côté primaire (L12) peut être commutée directement ou indirectement en série avec la première bobine côté primaire (L11) sur la même branche des transformateurs de courant alternatif triphasé au moyen des commutateurs commandables (Th1, Th2).

3. Arrangement selon la revendication 2, **caractérisé en ce que** les arrangements d'alimentation électrique (A, B) comprennent trois troisièmes bobines côté primaire (L13) et **en ce que** chaque troisième bobine côté primaire (L13) peut être commutée directement ou indirectement en série soit avec la première bobine côté primaire (L11), soit avec la première bobine côté primaire (L11) et la deuxième bobine côté primaire (L12) sur la même branche des transformateurs de courant alternatif triphasé au moyen des commutateurs commandables (Th1, Th2).

4. Arrangement selon la revendication 3, **caractérisé en ce qu'**un circuit parallèle de la deuxième bobine côté primaire (L12) et de la troisième bobine côté primaire (L13) en série avec la première bobine côté primaire (L11) sur la même branche des transformateurs de courant alternatif triphasé peut être commuté au moyen des commutateurs commandables (Th1, Th2).

5. Arrangement selon l'une des revendications 2 à 3, **caractérisé en ce que** les arrangements d'alimentation électrique (A, B) comprennent des organes de réglage de la puissance (S1, S2, S3) à l'aide desquels peut être réglée la puissance pouvant être transmise du côté primaire du transformateur de courant alternatif triphasé vers son côté secondaire.

6. Arrangement selon l'une des revendications 2 à 4, **caractérisé en ce que** les organes de réglage de la puissance (S1, S2, S3) contiennent les commutateurs commandables (Th1, Th2).

7. Arrangement selon la revendication 5 ou 6, **caractérisé en ce que** les arrangements d'alimentation électrique (A, B) possèdent un moyen de commande (C) à l'aide duquel les organes de réglage de la puissance (S1, S2, S3) peuvent être excités en commande séquentielle de tension.
